# EUROPEAN PATENT APPLICATION

(11) **EP 1 323 694 A2**
(43) Date of publication of application: **02.07.2003**
(21) Application number: 02396169.1
(22) Date of filing: 12.11.2002
(51) Int. Cl.: C05G 1/00, C05G 3/04

(54) **Neutralizing fertilizer composition**

(30) Priority: 12.11.2001 FI 20012189
(71) Applicant: KEMIRA AGRO OY, 00180 Helsinki (FI)
(72) Inventor: Hero, Heikki, 02200 Espoo (FI); Pulkkinen, Janne, 08500 Lohja as. (FI)
(74) Representative: Svensson, Johan Henrik

(57) **Abstract**

The invention relates to a soil-neutralizing fertilizer composition, in particular a fertilizer composition having a rapid neutralizing effect, the composition being suitable for use for fertilization and simultaneous combating of moss in yards, gardens and public green areas throughout the growing season, but in particular at the beginning and end of the growing season. The composition according to the invention is also suited for use in pastures suffering from acidity of the soil.

## Description

The present invention relates to a soil-neutralizing fertilizer composition, in particular to a fertilizer composition with a rapid neutralizing effect, the composition being suitable for use for fertilization and simultaneous combating of moss in yards, gardens and public green areas throughout the growing season, but in particular at the beginning and end of the growing season. The composition according to the invention is also suitable for use in pastures suffering from soil acidity.

Moss appears in a lawn where the grass for one reason or another grows poorly, giving room for moss. The reason for moss growth may be, for example, excessively compact soil, nonuniform availability of nutrients and water, and a shady growing site. Mild winters also promote the growth of moss.

Moss deteriorates the wear resistance and outer appearance of the surface of a lawn. The prevailing conception is that mosses thrive only on acid soils and that the increase in moss growth in lawns in recent years might be due to general acidification of the soil. This does not, however, hold completely true, since some moss species thrive specifically on limed soil, i.e. at least somewhat alkaline or neutral soil.

Moss can be combated by purely mechanical measures, for example, by raking the moss off and by improving the compact substrate by aeration, whereupon grass growth recovers and the grass becomes abundant so that moss no longer thrives in the lawn.

In addition to mechanical methods, there are various chemical preparations available for the removal of moss. Conventionally lawns have been limed with commonly used soil conditioners, such as crushed limestone or granular or fine-ground lime. However, liming agents raise the pH of the soil very slowly, and when the pH approaches neutral, their effect is almost nil. The effect on moss is slight or it is not observable.

There also exist commercial products that are intended specifically for mossy lawns and reduce the pH of the soil. These products intended specifically for the removal of moss usually contain iron. Iron is added thereto in the form of ferrous sulfate (FeSO₄.7H₂O), which is a harmful compound; its LD50 value is 1656. These products cause a rapid drop in the pH, and for this reason products containing ferrous sulfate effectively kill most mosses on the soil.

Bivalent iron (Fe⁺²) oxidizes in the soil to trivalent iron (Fe⁺³), forming rust. On marble or concrete garden tiles or other alkaline reacting substrates, the use of an iron-containing product constitutes a special problem, since iron becomes absorbed into the said structures and, under the effect of the alkaline environment, rapidly forms stable iron hydroxide [Fe(OH)₃], which spoils the outer appearance of the surface and is almost impossible to remove. Another disadvantage is that iron binds the soluble phosphorus in the soil to iron phosphate, and thus phosphorus is ultimately converted to a form unusable by plants.

In the soil, iron sulfate also causes acidification of the soil; attempts are made to rectify this by adding to the soil, for example, calcium carbonate or dolomite lime. The adding of an alkaline substance, however, nullifies the effect of the iron sulfate, or at least weakens it considerably.

From patent publication WO 9604222 there is known a soil-neutralizing fertilizer composition that contains 10 - 60 % of a magnesium-containing liming agent, for example dolomite; 10 - 60 % of an amide compound, for example urea; 10 - 30 % of a potassium compound; and possibly 0 - 50 % of other fertilizers and/or additives. Dolomite is, however, a slowly neutralizing liming agent, and it does not have a direct effect on moss. Especially in the spring, at the beginning of the growing season, and respectively in the autumn, at the end of the growing season, when the soil is still cold, the pH increase effected by means of dolomite or other conventional liming agents is too slow in terms of combating moss.

In a first aspect of the present invention, there is provided a neutralizing fertilizer for use for combating moss, said fertilizer containing a neutralizing agent having a rapid neutralizing capacity, said fertilizer comprising at least one of the plant nutrients N, P and K.

Thus, the present invention relates to a soil-neutralizing fertilizer composition, in particular a fertilizer composition having a rapid neutralizing effect of short duration, the fertilizer composition being suitable for use for fertilization and for simultaneous combating of moss in yards, gardens and public green areas throughout the growing season, but in particular at the beginning of the growing season as a so-called start fertilizer and/or at the end of the growing season as a so-called autumn fertilizer. A nitrogen-free neutralizing fertilizer according to the invention is especially suitable for use as an autumn fertilizer.

The fertilizer composition according to the invention, which may be in solution form, pulverous or granular, is suited for use also as a lawn fertilizer in pastures suffering from acidity of the soil.

The neutralizing fertilizer according to the invention contains a water-soluble, rapidly neutralizing agent, which may also serve as a plant nutrient, and the fertilizer may additionally contain one or more plant nutrients. The action of the neutralizing fertilizer is based on a rapid rise of the pH, which can best be described as a "pH shock." The neutralizing fertilizer contains 5 - 100 % (w/w), preferably 5 - 95 % (w/w) of a neutralizing agent that comprises, for example, one or several of the following compounds: sodium carbonate, potassium carbonate, sodium polyphosphate, potassium polyphosphate, sodium silicate, potassium silicate, sodium hydroxide and potassium hydroxide, or a substance containing the same, for example ash.

The neutralizing fertilizer may contain as a plant nutrient 0 - 95 % (w/w), preferably 5 - 95 % (w/w) of one or several readily soluble organic or inorganic nitrogen-containing substances selected, for example, from among the following: urea, sodium nitrate, potassium nitrate, magnesium nitrate, and calcium nitrate. In addition to or instead of the plant nutrients listed above the composition may contain 0 - 95 % (w/w) of magnesium sulfate, potassium chloride and/or potassium sulfate. The composition may also contain micronutrients, e.g. boron.

The use of ammonium salts as sources of nitrogen is limited, since under alkaline conditions, in particular when the pH rises above 9, ammonium salts break down and gaseous ammonia is released.

The neutralizing fertilizer according to the invention has a rapid neutralizing effect, it destroys moss well and provides plants a nitrogen source that is stable even when the pH of the soil is high. Neither the sodium nor the potassium present in the fertilizer has any effect, or it has very little effect, on the soluble phosphorus in the soil. Furthermore, in the possibly formed sodium or potassium phosphate the phosphorus continues to be in a form usable by plants. Sodium-containing salts are especially advantageous maintainers of the sodium/potassium electrolyte balance in lawn fertilizers.

A further advantage of the fertilizer of the present invention is that it does not cause rust stains on alkaline reacting substrates.

In a second aspect of the present invention there is provided a method for raising the pH of an acidified and/or mossy lawn and for combating moss, said method comprising applying to the lawn a fertilizer containing a neutralizing agent having a rapid neutralizing capacity, said fertilizer comprising at least one of the plant nutrients N, P and K. Said fertilizer is as defined above.

The present invention also relates to the use of a fertilizer as defined above on acidified and/or mossy lawns for raising the pH and combating moss.

In order to verify the functioning and efficacy of the neutralizing fertilizer according to the invention, a series of greenhouse and field tests were performed in May - October in summer 2001, testing two fertilizers according to the invention. A commercial product containing iron sulfate, intended for the removal of moss, was selected for the control tests. The field tests performed are described in greater detail in the following examples, which are, however, not intended to limit the invention in any way.

### Example 1

### Neutralizing lawn fertilizer A

A fertilizer mixture according to the formula below was (Table 1) prepared by mixing, and a neutralizing lawn fertilizer according to the invention, having a granule size of 1 - 2 mm, was prepared from the mixture in a conventional manner by granulation and screening. The chemical analysis of the product is shown in Table 2.

**Table 1**

| Raw material | kg/t |
|---|---|
| Urea (ground) | 425.0 |
| Sodium carbonate | 100.0 |
| Magnesium sulfate | 75.0 |
| Potassium sulfate | 400.0 |

**Table 2**

| Chemical analysis of the product | |
|---|---|
| Assay | Concentration |
| N | 20.2 % |
| Urea N | 20.2 % |
| K | 16.5 % |
| Mg | 1.4 % |
| Na | 4.2 % |
| S | 9.9 % |

The pH of a 10 % (w/v) aqueous solution prepared from lawn fertilizer A was 10.5.

The efficacy of the neutralizing lawn fertilizer A according to the invention was tested in a field test, for which a series of test squares, each 1 m² in size, were established at two separate sites, Site 1 and Site 2. At the beginning of the test, moss covered the test squares approximately 50 %.

The test arrangements were in accordance with Table 3. Table 3 also shows the results, based on visual observations, obtained in the tests; a-0 and b-0 are the zero tests, and on the other a and b test squares lawn fertilizer A according to the invention was dosed ½ dl, 1 dl or 2 dl according to Table 3.

To perform a control test, a commercial product containing iron sulfate, intended for the removal of moss and having a nitrogen (N) content of 10 % (w/w), was dosed on test squares (c). The product according to the invention and the control were dosed in corresponding amounts with respect to nitrogen.

The darkening and dying of the moss and the growth of the lawn were monitored daily. The results were graded on a scale of 0-5, in which 0 = no, 1 = poor, 2 = fair, 3 = satisfactory, 4 = good and 5 = excellent efficacy or growth.

**Table 3**

| Site 1 | | | |
|---|---|---|---|
| | Dose/N dl/m² | Effect on moss | Lawn growth |
| Test square | | | |
| a-0 | - | 0 | 1 |
| a-1 | ½ | 2 | 3 |
| a-2 | 1 | 4 | 4 |
| a-3 | 2 | 5 | 5 |
| c-1 | 1 | 3 | 2 |
| c-2 | 2 | 4 | 3 |
| c-3 | 4 | 5 | 4 |

| Site 2 | | | |
|---|---|---|---|
| | Dose/N dl/m² | Effect on moss | Lawn growth |
| Test square | | | |
| b-0 | - | 0 | 2 |
| b-1 | ½ | 3 | 3 |
| b-2 | 1 | 4 | 4 |
| b-3 | 2 | 5 | 5 |
| c-1 | 1 | 3 | 2 |
| c-2 | 2 | 4 | 3 |
| c-3 | 4 | 5 | 4 |

Fertilizer composition A according to the invention killed the moss as effectively as did the control sample, and in particular in a moist growing site (Site 2) the growth of the lawn was clearly stronger.

### Example 2

### Neutralizing lawn fertilizer B

A lawn fertilizer 10.5 - 0 - 20 +1.4 Mg + 8 Na + 11 S according to the formula below (NPK) was prepared by granulation, the fertilizer also being urea-based. The granule size of the completed fertilizer was 1-2 mm. The chemical analysis of the product is shown in Table 4.

| Raw material | kg/t |
|---|---|
| Urea (ground) | 225.0 |
| Sodium carbonate | 200.0 |
| Magnesium sulfate | 75.0 |
| Potassium sulfate | 500.0 |

**Table 4**

| Chemical analysis of the product | |
|---|---|
| Assay | Concentration |
| N | 10.5 % |
| Urea N | 10.5 % |
| K | 21.0 % |
| Mg | 1.4 % |
| Na | 7.9 % |
| S | 11.5 % |

The pH of a 10 % (w/v) aqueous solution prepared from lawn fertilizer B was 10.7.

Four parallel test series were performed, wherein on each test square established in a greenhouse there was dosed 1.5 dl/m² of lawn fertilizer B, which contained nitrogen (N) 10.5 % (w/w). In order to perform a control test, 1.5 dl/m² of the same commercial product as in Example 1, containing iron sulfate, intended for the removal of moss, was dosed on each test square (c) The darkening and dying of the moss was monitored daily, as was the growth of the lawn. The results were graded as in Example 1 by using the scale of 0-5.

Results congruent with those of Example 1 were obtained in this experiment, except that the lawn started to grow clearly best in the test squares on which lawn fertilizer B had been dosed.

### Example 3

### Effect on garden tiles

Lawn fertilizer B was sprinkled on conventional concrete garden tiles, and the commercial product containing iron sulfate used in Examples 1 and 2 was sprinkled on the control tiles. The tiles were moistened with a spray of water. The dissolving of the samples under the effect of moisture and their absorption into the tiles were monitored. After 24 hours, ugly spots of rust had already formed around partly still undissolved granules on the tiles on which the control sample had been spread. On the tiles on which there was lawn fertilizer B, no stains had formed.

The lawn fertilizer according to the invention destroys moss effectively, and under its effect the lawn grows well, especially strongly in moist soil. Correction of the soil pH once or twice a year in connection with fertilization with the fertilizer according to the invention enhances the effect of liming.

No staining effect of the fertilizer on concrete tiles was observed, and its corrosive action is considerably less than that of acid products used for corresponding purposes.

## Claims

1. A neutralizing fertilizer for use for combating moss, **characterized in that** it contains a neutralizing agent having a rapid neutralizing capacity, said fertilizer comprising at least one of the plant nutrients N, P and K.

2. The fertilizer according to Claim 1, **characterized in that** it contains as the rapidly neutralizing agent one or several compounds selected from the following group: sodium carbonate, potassium carbonate, sodium polyphosphate, potassium polyphosphate, sodium silicate, potassium silicate, sodium hydroxide, potassium hydroxide, or a substance containing the same.

3. The fertilizer according to Claim 1 or 2, **characterized in that** it contains 5 - 100 % (w/w) of a neutralizing agent and 0 - 95 % (w/w) of one or several plant nutrients.

4. The fertilizer according to any of Claims 1-3, **characterized in that** it contains 5 - 95 % (w/w) of a neutralizing agent and 5 - 95 % (w/w) of one or several plant nutrients.

5. The fertilizer according to any of Claims 1-4, **characterized in that** it contains as a plant nutrient one or several readily soluble organic or inorganic substances containing nitrogen, the substance being selected from the following group: urea, sodium nitrate, potassium nitrate, magnesium nitrate, and calcium nitrate.

6. The fertilizer according to any of Claims 1-5, **characterized in that** it contains as a plant nutrient one or several of the following compounds: magnesium sulfate, potassium chloride, and potassium sulfate.

7. The fertilizer according to any of Claims 1-6, **characterized in that** it additionally contains at least one conventional micronutrient, e.g. boron.

8. Use of a fertilizer according to any of Claims 1-7 on acidified and/or mossy lawns for raising the pH and combating moss.

9. A method for raising the pH of an acidified and/or mossy lawn and for combating moss, **characterized by** applying to the lawn a fertilizer containing a neutralizing agent having a rapid neutralizing capacity, said fertilizer comprising at least one of the plant nutrients N, P and K.

10. The method according to Claim 9, **characterized by** applying to the lawn a lawn fertilizer as defined in any of Claims 2-7.
